# EUROPEAN PATENT SPECIFICATION

(11) **EP 4 334 580 B1**
(45) Date of publication and mention of the grant of the patent: **08.07.2026**
(21) Application number: 22724292.2
(22) Date of filing: 26.04.2022
(51) Int. Cl.: F01N 3/20, F01N 3/28

(54) **ELECTRICAL HEATERS FOR EXHAUST AFTERTREATMENT SYSTEMS AND ASSEMBLIES**
ELEKTRISCHE HEIZELEMENTE FÜR ABGASNACHBEHANDLUNGSSYSTEME UND -ANORDNUNGEN
DISPOSITIFS DE CHAUFFAGE ÉLECTRIQUES POUR SYSTÈMES ET ENSEMBLES DE POST-TRAITEMENT DES GAZ D'ÉCHAPPEMENT

(30) Priority: 03.05.2021 US 202163183573 P; 28.10.2021 US 202163272796 P
(43) Date of publication of application: 13.03.2024
(73) Proprietor: Corning Incorporated, Corning, New York 14831 (US)
(72) Inventor: COLLINS, Thomas Adam, New York 14815 (US)
(74) Representative: Sturm, Christoph
(86) International application number: PCT/US2022/026356
(87) International publication number: WO 2022/235457

(56) References cited:
- EP-A2- 0 452 125
- WO-A1-93/21430
- DE-A1- 102012 109 391

## Description

### CROSS REFERENCE TO RELATED APPLICATION

This application claims the benefit of priority under 35 U.S.C. §119 of U.S. Provisional Application Serial No. 63/272796 filed on October 28, 2021, and of U.S. Provisional Application Serial No. 63/183573 filed on May 3, 2021.

### FIELD

This disclosure relates to electrical heaters, and more particularly to exhaust aftertreatment systems and assemblies that comprise electrical heaters.

### BACKGROUND

Temperature control can be useful during the treatment of fluid streams. For example, catalytic materials can be used in the treatment of fluid flows, such as in the aftertreatment of engine exhaust. Catalytic activity of such materials may not initiate until the catalytic material reaches some minimum threshold temperature, which may be referred to as the light-off temperature. Overall emissions can be reduced by minimizing the amount of time the catalyst is below its light-off temperature while the engine is in operation. Electrical heaters provide one manner for assisting in control of temperature during treatment of a fluid stream, such as to increase the temperature of a catalyst material.

DE 10 2012 109 391 A1 discloses a honeycomb body extruded from ceramic material, wherein the honeycomb body is electrically heatable.

### SUMMARY

Disclosed herein are various embodiments for electrical heaters, particularly for use in vehicle exhaust aftertreatment systems.

The invention provides an electrical heater assembly according to claim 1.

In embodiments, the first end of the electrode extends in an axial direction from the heater body.

In embodiments, the first end of the electrode extends from the heater body at an acute angle from an axial direction.

In embodiments, the resistive portion comprises an outer periphery that is intersected by the plurality of slits, wherein the outer periphery corresponds to a superimposed shape defined by tracing continuously over both the outer periphery and intersections of the slits with the outer periphery, and wherein the electrode is completely radially contained within the superimposed shape.

In embodiments, the electrode comprises a first portion at the first end that extends transversely from the heater body, a second portion at a second end opposite to the first end, and an arm connecting the first portion to the second portion, wherein the arm extends in a direction transverse to the first portion and the second portion, such that the first portion and the second portion are at locations aligned with different angles relative to a center of the heater body.

In embodiments, the electrode attachment portion comprises a first electrode attachment portion and a second electrode attachment portion located at opposite ends of the serpentine current-carrying path, and the electrode comprises a first electrode and a second electrode connected to the heater body respectively at the first electrode attachment portion and the second electrode attachment portion.

In embodiments, the electrode attachment portion is a solid block.

In embodiments, a density of the heater body at the electrode attachment portion is greater than that at the resistive portion.

In embodiments, the resistive portion and the electrode attachment portion are integrally formed together.

In embodiments, the resistive portion and the electrode attachment portion are formed from the same material.

In embodiments, the resistive portion comprises a honeycomb array of intersecting walls defining cells, and the electrode attachment portion is a solid section having a size of at least one cell.

In embodiments, a fluid treatment assembly is provided that comprises the electrical heating assembly of any of the preceding paragraphs and an aftertreatment component contained together in a tubular housing.

In embodiments, the electrode extends axially through the tubular housing.

In embodiments, the aftertreatment component comprises a catalyst-carrying substrate.

In embodiments, the electrical heating assembly is upstream of the aftertreatment component.

In embodiments, the tubular housing comprises a first portion having a first diameter and a transitional portion that transitions the tubular housing to a second diameter that is smaller than the first diameter, and wherein the heater body is housed within the first portion of the tubular housing, and wherein the electrode protrudes axially through the second portion.

In embodiments, the electrode is completely radially contained within the first diameter of the first portion of the tubular housing.

In embodiments, the transitional portion is tapered.

In embodiments, the first portion is downstream of the transitional portion.

In embodiments, the first diameter is constant over an axial length of the first portion.

In embodiments, the assembly further comprises a retaining ring securing the heater body within the tubular housing.

In embodiments, the assembly further comprises a feed-through electrically insulating the electrode through transitional portion, fluidically sealing the tubular housing about the electrode, or both.

In embodiments, the first end of the electrode extends in an axial direction from the heater body.

In embodiments, the superimposed shape is a regular geometric shape.

In embodiments, a method of manufacturing a fluid treatment assembly is provided that comprises positioning the heater body of the electrical heater assembly of any preceding paragraph in a first portion of a tubular housing; and extending an electrode connected to the heater body axially through a transitional portion of the tubular housing, wherein the transitional portion transitions the tubular housing from a first diameter at the first portion to a second diameter that is smaller than the first diameter, such that the electrode is completely radially contained within the first diameter.

It is to be understood that both the foregoing general description and the following detailed description are merely exemplary, and are intended to provide an overview or framework to understanding the nature and character of the claimed subject matter. The accompanying drawings are included to provide a further understanding and are incorporated in and constitute a part of this specification. The drawings illustrate one or more embodiment(s), and together with the description, serve to explain principles and operation of the various embodiments.

### BRIEF DESCRIPTION OF THE DRAWINGS

FIG. 1 is cross-sectional side view of an exhaust aftertreatment assembly.
FIG. 2 is a front view of a heater according to one embodiment disclosed herein.
FIG. 3 is an enlarged view of the area generally encircled in FIG. 2.
FIG. 4A and 4B are a side views of heater assemblies according to embodiments disclosed herein.
FIGS. 5 is a side view of the heater of FIG. 2 installed in a housing of the assembly of FIG. 1.
FIG. 6 is a front view of a heater according to one embodiment disclosed herein.
FIGS. 7 and 8 are side views of a portion of the heater of FIG. 6 installed in a portion of the assembly of FIG. 1 according to embodiments disclosed herein.

### DETAILED DESCRIPTION

Reference will now be made in detail to exemplary embodiments which are illustrated in the accompanying drawings. Whenever possible, the same reference numerals will be used throughout the drawings to refer to the same or like parts. The components in the drawings are not necessarily to scale, emphasis instead being placed upon illustrating the principles of the exemplary embodiments.

Modifications of the disclosure will occur to those skilled in the art and to those who make or use the disclosure. Therefore, it is understood that the embodiments shown in the drawings and described herein are merely for illustrative purposes and not intended to limit the scope of the disclosure, which is defined by the following claims, as interpreted according to the principles of patent law, including the doctrine of equivalents.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the disclosure should be understood to also include the specific value or end-point referred to.

Directional terms as used herein-for example up, down, right, left, front, back, top, bottom-are made only with reference to the figures as drawn and are not intended to imply absolute orientation. As used herein, the term "radial" refers to directions perpendicular to the indicated axial direction that extend from the center point (center axis) of a shape to or toward the outer perimeter of the shape, regardless of the shape of the component or feature with respect to which the radial direction is used. Similarly, the term "diameter" as used herein is not limited to circular shapes, but instead refers to the longest dimension of a component that passes through the center point (center axis) of the shape of that component. For example, a radial distance of a square-shaped component can be measured as the straight-line distance from the center point (center axis) to an intersection with one of the walls of the square, while the diameter of a square refers to the longest dimension diagonally across the square. The terms "cross-sectional width" or "cross-sectional dimension" may also be used to refer to these directions perpendicular to the axial direction.

Fluid treatment systems, such as automobile exhaust aftertreatment systems, can comprise a supplemental source of heat to facilitate faster catalyst light-off, particularly in comparison to catalyst-containing aftertreatment systems that do not have any supplemental heat (e.g., instead relying on the heat of the engine exhaust). For example, heat can be supplied by an electric heater (e.g., arranged to transfer heat to the catalyst material) or an electrically heated catalyst substrate (e.g., an electrically conductive substrate that is carrying a catalytic material). For example, a heater can be arranged upstream of a catalyst substrate and heat the catalyst by providing heat to the flow of exhaust (or supplemental air), which in turn heats the catalyst. Aftertreatment systems employing supplemental heat can be provided to reduce emissions in gasoline, diesel, and/or hybrid vehicles to assist in ensuring fast and consistent light-off of the catalyst during operation of the corresponding engine, particularly after cold-start of the engine.

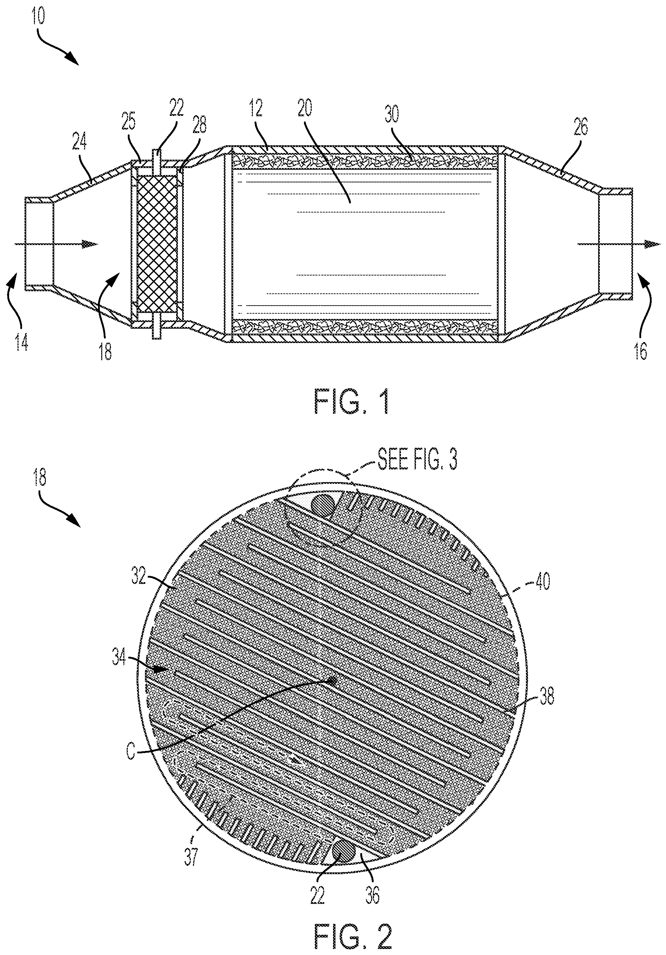

Referring now to FIG. 1, a fluid treatment assembly 10 is illustrated, e.g., which can be arranged as part of an exhaust system of automobile. The fluid treatment assembly 10 comprises an outer housing 12 (which may be alternatively referred to as a "can"), such as formed in a generally tubular shape (hollow tube) from metal or suitable material. The tubular housing 12 has an inlet 14, e.g., which can be connected in fluid communication with the exhaust manifold of an internal combustion engine, and an outlet 16, e.g., which can be connected in fluid communication with a tail pipe of an automobile.

Exhaust from an engine can be treated (e.g., one or more pollutants removed or abated) as the exhaust is flowed from the inlet 12 to the outlet 14 through the assembly 10. To this end, the assembly 10 further comprises a heater assembly 18 and an aftertreatment component 20 located between the inlet 12 and outlet 14. For example, the aftertreatment component 20 can be a catalyst-loaded substrate, a particulate filter, or a catalyst-loaded particulate filter. For example, catalyst substrates and particulate filters can comprise a porous ceramic honeycomb body having an array of walls that form a plurality of fluid flow paths or channels extending axially (in the direction of exhaust flow and/or perpendicular to the end faces of the body) through the body.

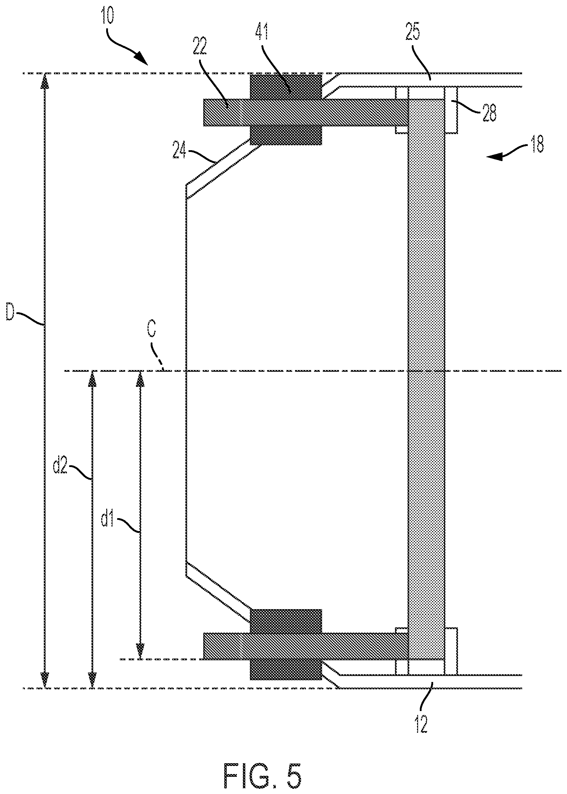

As described in more detail herein, the heater assembly 18 can be a resistance heater that provides supplemental heat in order to facilitate functionality of the aftertreatment component 20, e.g., by quickly initiating light-off of catalytic material disposed in or on the walls of the heater assembly 18 and/or the aftertreatment component 20. For example, the heater assembly 18 can comprise, or otherwise be connected to, electrodes 22. The electrodes 22 can be arranged extending through the housing 12 in order to connect the heater assembly 18 to a power source, such as a vehicle battery. As shown in FIG. 1, the electrodes 22 can extend radially through the housing 12. However, as also described herein and shown in other Figures (e.g., FIG. 5), the electrodes 22 can extend axially through the housing 22. In this way, the heater assembly 18 can be arranged to generate heat via Joule heating when the heater assembly 18 is connected to a power source and a corresponding voltage is applied to flow current through the walls of the heater assembly 18. The electrodes 22 are shown in FIG. 1 as being arranged on opposite sides of the heater assembly 18 (e.g., spaced 180° apart with respect to the exterior of the heater assembly 18), but can be arranged at other locations or angles.

In some embodiments, such as shown in FIG. 1, the heater assembly 18 is positioned upstream of the aftertreatment component 20 in order to increase the temperature of the exhaust flow and/or provide direct heating to the aftertreatment component 20, which in turn increases the temperature aftertreatment component 20, such as the temperature of the catalytic material carried by the aftertreatment component 20 as the exhaust flows through the aftertreatment component 20. In some embodiments, the heater assembly 18 and the aftertreatment component 20 can be effectively combined into a single device by directly loading the body of the heater assembly 18 with a catalyst. Such arrangements useful for heating a catalyst material may be referred to as an electrically heated catalyst, or EHC.

A vehicle exhaust system can be created by connecting additional lengths of piping (not shown) to the assembly 10 at the inlet 14 (e.g., extending between the inlet 14 and the engine exhaust manifold) and outlet 16 (e.g., extending from the outlet 16 to the tail pipe). Depending on the design or configuration of the exhaust system, which may vary vehicle to vehicle, the various components and/or lengths of piping can have different diameters at different positions along the flow path through the exhaust system. For example, the housing 12 can comprise a first transitional portion 24, e.g., at an upstream end and a second transitional portion 26, e.g., at a downstream end. The transitional portions 24, 26 are portions of the housing 12 that enable or provide a change of dimension in the housing 12. For example, both of the transitional portions 24, 26 are tapered in FIG. 1. However, the transitional portions 24, 26 can be stepped, conical, tapered, radiused, parabolic, or other shape that transitions from a first dimension to a second dimension. For example the transitional portion 24 transitions the housing 12 from a first diameter at a first portion 25 of the housing 12 (at which the heater assembly 18 is positioned) to a second diameter of the housing at the end 14.

In this way, the inlet and outlet ends 14, 16 can be used to facilitate connection of the assembly 10 between exhaust piping of different diameters. In other embodiments, one or both of the upstream and downstream ends 14, 16 can have substantially the same diameter as the lengths of piping to which they are connected. Instead of tapers, the exhaust system can alternatively or additionally transition between different dimensions at abrupt steps. In some embodiments, such as shown in FIG. 1, the housing 12 transitions between different diameters at the heater assembly 18 and the aftertreatment component 20. However, in other embodiments, the housing 12 can be substantially the same dimension at both the heater assembly 18 and the aftertreatment component 20, e.g., such as in embodiments in which the heater assembly 18 and the aftertreatment component 20 have the same diameter.

The heater assembly 18 and the aftertreatment component 20 can be held in place, supported, and/or contained within the housing 12 in any suitable manner. For example, the body of the heater assembly 18 can be held in place and supported via one or more retainers 28, e.g., retaining rings. The aftertreatment component 18 can be supported by similar retainers and/or supported by a mat 30, such as an inorganic fiber mat, which assists in protecting the aftertreatment component, such as from vibrations or thermal expansion forces exerted on the aftertreatment component 20.

Referring now to FIG. 2, one embodiment for the heater assembly 18 is illustrated. Consistent with the disclosure herein, the embodiments illustrated and/or described herein can be used as, or incorporated in, the heater assembly 18 in the assembly 10, and combinations of the features of the embodiments illustrated or described herein can be used together for the heater assembly 18 in the assembly 10.

As described further herein, the heater assembly 18 comprises a body 32 made of electrically conductive material that comprises a resistive (heat-generating) portion 34 and one or more electrode attachment portions 36 (two attachment portions 36 illustrated in FIG. 2). In this way, an electrical connection can be established through the resistive portion 34 via one or more electrodes 22 secured at the one or more electrode attachment portions 36 for carrying current to, from, and/or between the electrodes 22 at the electrode attachment portions 36. For example, the properties of the resistive portion 34 can be set with respect to the voltage applied across the electrodes 22 in order to generate heat as electrical current passes through the material of the resistive portion 34 of the body 32.

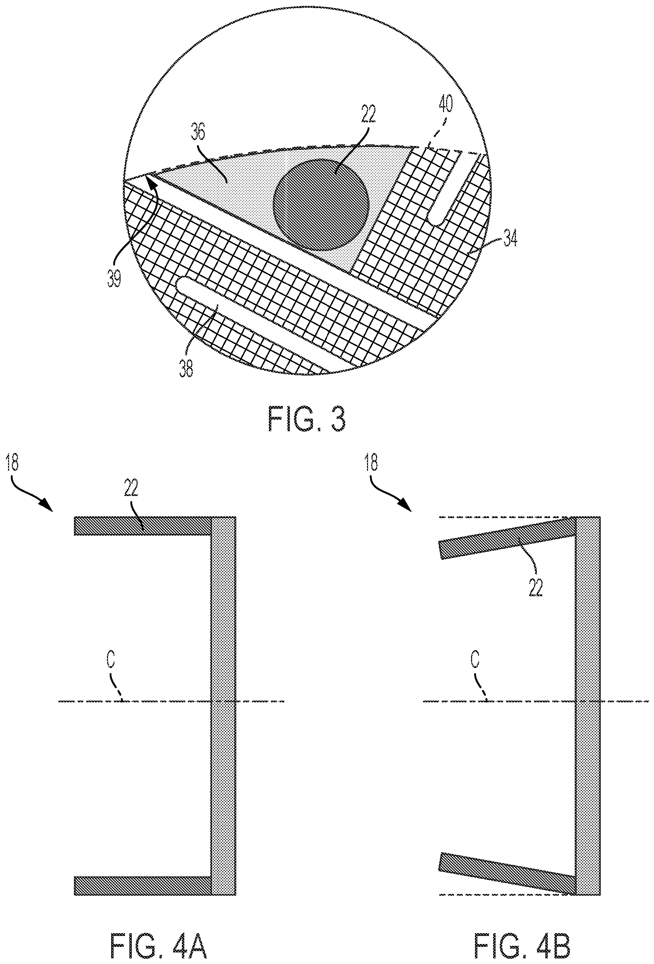

In the embodiment of FIG. 2, the resistive portion 34 of the body 32 comprises an array of intersecting walls that form a plurality of channels extending in an axial direction through the body 32, and thus is of the type that may be referred to as a honeycomb body (an enlarged example of which is shown in FIG. 3). For example, the channels enable a fluid to flow through the body 32 (e.g., a flow of exhaust fluid) and the intersecting walls provide surface area for heat exchange with the fluid flow. Each of the sections of the walls that are enclosed together to define one the flow channels may be referred to herein as a cell. Accordingly, in FIG. 2 and 3, the array of walls define a corresponding array of square-shaped cells, which together form a honeycomb design for the body 32. However, the cells can have any other desired cross-sectional shape (the shape perpendicular to the axial direction), such as hexagonal, triangular, or other polygon. Furthermore, in some embodiments, in lieu of geometrically-shaped cells and channels, the resistive portion 34 of the body 32 comprises irregular flow paths, such as an irregular interconnected porous structure. For example, in embodiments, the resistive portion 34 of the body 32 can be comprised of a foam-like or interwoven fiber (or other elongated fiber-like or wire-like elements) configuration of conductive material in which the flow paths through the body 32 are irregularly formed by the pores, voids, opening, or interstices in the foam-like structure and/or between interwoven fibers or fiber-like elements of conductive material. In embodiments, the body 32 can be formed by additive manufacturing, perforation of a sheet of conductive material, weaving of wires or fibers into a mesh, mat, or screen, foaming an electrically conductive material, or other suitable process.

The body 32 further comprises cutouts, slots, or slits 38 (hereinafter slits 38) that create disconnections, e.g., gaps, that break electrical conductivity at certain locations in the body 32, for example, by severing, breaking, or disconnecting portions of the body 32 from each other, thereby forcing electrical current to flow in a designated path around these disconnected portions. For example, the slits 38 can be air gaps, or filled with an electrically insulating material.

As shown in FIG. 2, the slits 38 extend across the body 32 alternatingly from opposite sides of the body 32, such that the material of the body 32 (e.g., intersecting walls) is connected together in a serpentine pattern doubles back on itself across the body 32 multiple times. In the enlarged view of FIG. 3, one of the slits 38 is shown intersecting the outer periphery of the resistive portion 34 of the body 32 at an intersection 39. Thus, the intersections 39 caused by the slits 38 create a corresponding disconnection, break, or gap in the outer periphery of the resistive portion 34. A portion of the serpentine path is indicated by a dashed arrow 37 in FIG. 2. As a result, electrical current carried through the material of the body 32 between the electrodes 22 is forced along the serpentine path. The serpentine path is not limited to that shown in FIG. 2, as the slits 38 can be included at different lengths, angles, widths, or other dimensions in order to set other shapes for the serpentine path.

Accordingly, the electrical disconnections caused by the slits 38 enables the current path length between the electrodes 22 to be increased, as the electrical current is forced to traverse back and forth across the body 32 multiple times instead of directly flowing in a straight line directly between the electrodes 22. Since the overall resistivity of the heater body 32 is dependent on the overall current-carrying path length between the electrodes 22, the resistivity of the heater assembly 18 can be set, at least in part, by selecting the dimensions, locations, and number of slits 38 (thereby setting the dimensions of the serpentine current-carrying path).

In the embodiment of FIG. 2, each of the electrodes 22 is attached to the heater body 32 at one of the electrode attachment portions 36, which are shown enlarged in FIG. 3. Unlike the resistive portion 34 of the body 32 (e.g., intersecting walls, foam-like structure, interwoven fibers), the attachment portions 36 can be formed as a densified or solidified block or section of conductive material. Accordingly, a density of the body 32 at the electrode attachment portions can be greater than the density of the body 32 at the resistive portion 34. For example, the relatively lower density of the resistive portion 34 can be achieved by the inclusion of the fluid flow paths, e.g., channels, pores, openings, or interstices, that enable fluid to flow through the body 32, while the electrode attachment portions 36 are relatively solidified and/or densified. Thus, the determination of the density of the body 32 as referred to herein is inclusive of the volume of the voids, openings, channels, or interstices in the body 32 (as opposed to the density of the material from which the body 32 is made, which would only include the volume of the solid material itself). The relatively higher density of the body 32 at the attachment portions not only provides additional strength and material to support attachment of the electrodes 22, but also increases conductivity of the body 32 at the attachment portions 36 to inhibit the generation of heat at the electrodes 22. In contrast, the relatively lower density of the body 32 at the resistive portion 34 (e.g., provided by the channels, voids, openings, pores, or interstices as described herein) corresponds to a reduced conductivity, and thus increased resistivity, which enables the resistive portion 34 to generate heat.

The electrode attachment portions 36 and the resistive portion 34 can be formed from the same material. The attachment portions 36 can be integrally (monolithically) formed with the resistive portion 34, or connected via welding, mechanical fasteners, or other attachment means. With reference to FIG. 3, it can be seen that the electrode sites 36 provide sufficient surface area, e.g., at least as large as, or larger than, the cross-sectional size of each electrode 22, to enable the electrodes 22 to be attached to the body 32.

As shown in the embodiment of FIG. 4A, the electrodes 22 extend from the body 32 in the axial direction (contrary to that shown in FIG. 1 in which the electrodes extend in the radial direction). Accordingly, in embodiments disclosed herein, at least the portion of the electrode 22 attached to the body 32 extends from the body 32 in the axial direction or in a direction that comprises a directional component that is parallel to the axial direction. Accordingly, the electrodes 22 extend from the body 32 in a direction that is generally transverse to the diameter of the body 32, and thus, transverse to the direction of current flow. For example, the electrodes 22 can extend in the axial direction or in a direction that is at an acute angle relative to the axial direction (and having a directional vector component that is parallel to the axial direction). For example, the electrodes 22 can extend in transverse direction that is generally in the axial direction but is angled by an acute angle radially inwardly, as shown in FIG. 4B.

As shown in FIG. 5, arranging the electrodes 22 to extend axially from the axial faces of the body 32 enables the electrodes to extend axially through the transitional portion 24 of the housing 12, as opposed to radially outward through the housing 12 as shown in FIG. 1. A feedthrough 41 can be included to facilitate extension of the electrodes 22 through the housing 12, such as an insulated jacket that assists in electrically insulating the electrodes 22 from the housing and/or sealing the exhaust within the assembly 10 (e.g., thereby preventing exhaust leakage from the piping of the exhaust system).

As shown in FIG. 5, attaching the electrodes 22 so that the electrodes 22 extend in the axial direction, e.g., axially though the transitional portion 24, enables the electrodes 22 to be contained radially within an outer perimeter or envelope of the assembly 10, the housing 12, the body 32, or a portion thereof, such as within an outer diameter D of the housing 12 at the location where the heater assembly 18 is located. By "contained radially" it is meant that the electrodes 22 do not protrude radially outside of the outer dimensions of the relevant component(s) of the assembly 10.

Radially containing the electrodes 22 within the outer perimeter of the housing 12 can be advantageous to save space or otherwise make better usage of space, which may thereby assist in reducing the overall size of the assembly 10 and/or the exhaust system of which the assembly 10 is installed. For example, available space can be extremely limited in the undercarriage area of automobiles. In some embodiments, it can be determined whether the electrodes are contained radially within the outer perimeter or envelope of the assembly 10 when the electrodes 22 are at a first maximum distance d1 from the center axis C, the portion of the housing 12 containing the heater assembly 18 (at the same axial location as the body of the heater assembly 18) is at a second maximum distance d2 from the center axis C, and the first maximum distance d1 is less than or equal to the second maximum distance d2. If a feedthrough 41 is included, the feedthrough 41 can optionally be arranged so that it is also fully radially contained within the outer perimeter of the housing 12 of the assembly 10 if desired.

In the embodiment of FIGs. 2-3, the outer periphery of the resistive portion 34 of the body 32 has an outer shape, which can be superimposed by a shape that traces along the outer perimeter of the resistive portion 34. That is, despite having the slits 38 that create small breaks or gaps at the outer perimeter of the body 32, the body 32 is arranged so that the outer periphery of the resistive portion 34 has a circular shape, and thus, can be superimposed by a circle that traces along the remaining unslit portions of the outer periphery of the resistive portion 34. This superimposed shape is indicated as a dashed line 40 in FIGs. 2-3. Thus, as referred to herein, the superimposed shape 40 of the outer perimeter refers to a shape (e.g., a regular geometric shape such as a circle, ellipse, triangle, rectangle, square, polygon, trapezoid) that can be superimposed on the resistive portion 34 (or an axial projection of thereof) and traces over the outer perimeter of the resistive portion 34, but which does not include breaks or gaps caused by the slits 38. In other words, although the outer periphery of the resistive portion 34 is not perfectly a circle (e.g., due to the presence of the slits 38 that break the circle), the shape of the outer periphery of the resistive portion 34 is understood to nevertheless be defined by a circle. In this way, the superimposed shape 40 corresponds to what is understood to be the unbroken shape of the outer periphery of the resistive portion 34.

According to embodiments disclosed herein, the electrode attachment portions 36, the electrodes 22, or both, are completely radially contained within the superimposed shape 40 of the resistive portion 34, and thereby do not protrude radially from the body 32. For example, it can be determined that the electrode attachment portions 36 are substantially contained within the superimposed shape 40 of the body 32 when the electrode attachment portions 36 do not extend further from a center axis C, in a direction perpendicular to the axial direction, than any portion of the outer perimeter of the resistive portion 34 of the body 32. For example, in the embodiment of FIGs. 2-3, the outer perimeter of the resistive portion 34 of the body 32 is at a distance from the center axis equal to the radius of the body 32 and the entirety of the electrode attachment portions 36 are also contained within this radial distance (which defines the circular superimposed shape 40). In some embodiments, the superimposed shape 40 is a regular geometric shape, such as a rectangle, square, triangle, circle (shown in FIG. 2), ellipse, superellipse, trapezoid, or polygon. In some embodiments, the attachment portions are completely radially contained within the superimposed shape of the outer perimeter.

As described above, the electrodes 22 can be attached to the body at the attachment portions 36 so that the electrodes 22 extend in the axial direction. Thus, similar to the discussion above, by connecting the electrodes 22 to the body 32 in the axial direction, the electrodes 22 can be connected to the body 32 such that they are also substantially radially contained within the superimposed shape 40 of the outer perimeter of the body 32, such as completely radially contained within the superimposed shape 40 of the outer perimeter of the body 32. Advantageously, the heater assembly 18, inclusive of the electrodes 22, can be created with a compact outer radial dimension, e.g., in comparison to heaters that have radially extending electrodes, such as the embodiment of the heater assembly 18 shown in FIG. 1.

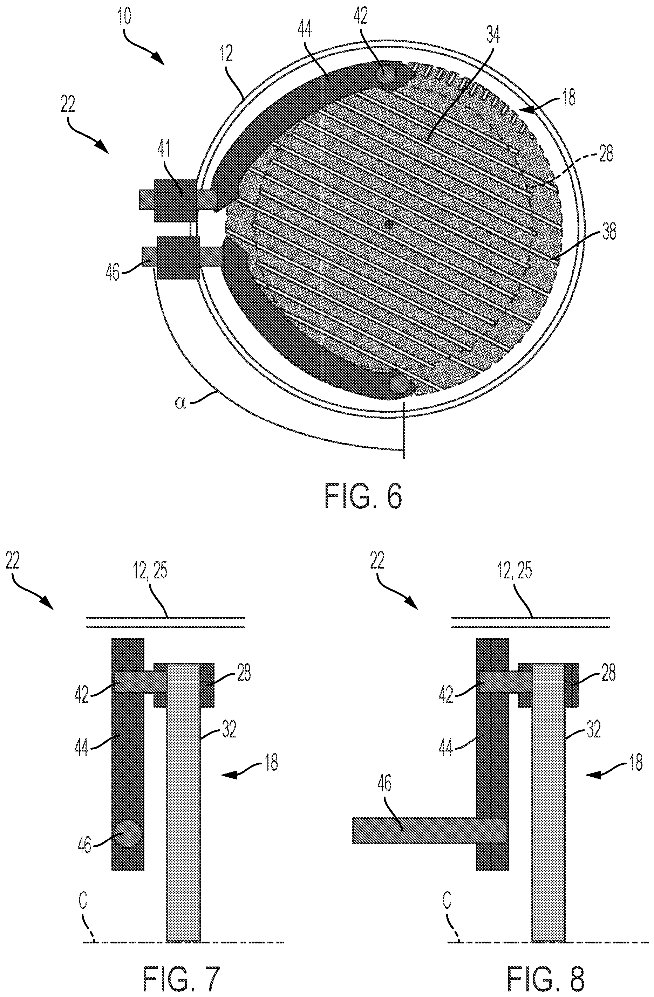

In embodiments, only one or more portions of the electrodes 22 extend axially, such as the portions at one or both terminating ends of the electrodes 22, e.g., a first end of the electrode 22 connected to the body 32 or a second end opposite to the first end that extends through the housing 12. For example, in FIGs. 6-8, illustrate the electrodes 22 each comprising a first end in the form of a stud portion 42 connected to the body 32 at the attachment portions 36. The stud portions 42 can be attached the body 32 as described above generally with respect to the electrodes 22 in FIG. 3. In this way, the stud portions 42 extend axially from the body 32. However, unlike the embodiments described with respect to FIGs. 4-5, each of the electrodes 22 in the embodiments of FIGs. 6-8 comprise an arm 44. The arms 44 can be bent or angular pieces that enable the second ends 46 of the electrodes 22, opposite to the attachment portions 36, to be positioned at any selected or desired angle α relative to the center axis. For example, in FIG. 6, the arms 44 position the ends 46 so that they are at rotated about the center axis C by the angle α of approximately 90° relative to the position of the studs 42. The arms 44 can be substantially radially outside of the inner radial dimension of the retaining ring 28, e.g., so as not to block additional exhaust flow through the heater assembly 18. As shown in FIGs. 6 and 7, the ends 46 can extend in the radial direction, while FIG. 8 shows that the ends 46 can alternatively extend in the axial direction. Advantageously, even when the ends 46 extend radially (and thus are not radially contained within the outer dimensions of the body 32 or the housing 12), the embodiment of FIGs. 6 and 7 may nevertheless provide the aforementioned space saving benefits as the arms 44 and studs 42 are radially constrained, and the ends 46 can be positioned together where space is available.

## Claims

1. An electrical heater assembly (18) comprising:
a heater body (32) comprising:
a resistive portion (34), wherein the resistive portion (34) comprises an array of intersecting walls, a foamed material, interwoven fibers or wires, a mesh, or a screen, wherein the resistive portion (34) comprises a plurality of channels, openings, voids, pores, or fluid flow paths therethrough;
a plurality of slits (38) in the resistive portion (34) that electrically disconnects sections of the resistive portion (38) from each other to define a serpentine current-carrying path through the resistive portion (34);
**characterized in that** the electrical heater assembly (18) comprises an electrode attachment portion (36) connected at an end of the serpentine current-carrying path, and
an electrode (22) comprising a first end that is electrically connected to the heater body (32) at the electrode attachment portion (36), wherein the first end extends in a transverse direction from the heater body (22) and thus, transverse to the direction of current flow,
wherein the resistive portion (34) comprises an outer periphery that is intersected by the plurality of slits (38), wherein the outer periphery corresponds to a superimposed shape (40) defined by tracing continuously over both the outer periphery and intersections of the slits (38) with the outer periphery, and wherein the electrode attachment portion (36) is completely radially contained within the superimposed shape (40).

2. The electrical heater assembly (18) of claim 1, wherein the resistive portion (34) of the body (32) comprises an array of intersecting walls that form a plurality of channels extending in an axial direction through the body (32).

3. The electrical heater assembly (18) of claim 2, wherein the first end of the electrode (22) extends in the axial direction from the heater body (32).

4. The electrical heater assembly (18) of claim 2, wherein the first end of the electrode (22) extends from the heater body (32) at an acute angle from an axial direction.

5. The electrical heater assembly (18) of any one of claims 1-4, wherein the resistive portion (34) comprises an outer periphery that is intersected by the plurality of slits (38), wherein the outer periphery corresponds to a superimposed shape (40) defined by tracing continuously over both the outer periphery and intersections of the slits (38) with the outer periphery, and wherein the electrode (22) is completely radially contained within the superimposed shape (40).

6. The electrical heater assembly (18) of any one of claims 1-5, wherein the electrode comprises a first portion at the first end that extends transversely from the heater body (22), a second portion at a second end (46) opposite to the first end, and an arm (44) connecting the first portion to the second portion, wherein the arm (44) extends in a direction transverse to the first portion and the second portion, such that the first portion and the second portion are at locations aligned with different angles relative to a center (C) of the heater body (32).

7. The electrical heater assembly (18) of any one of claims 1-6, wherein the electrode attachment portion (36) comprises a first electrode attachment portion and a second electrode attachment portion located at opposite ends of the serpentine current-carrying path, and the electrode (22) comprises a first electrode and a second electrode connected to the heater body (32) respectively at the first electrode attachment portion and the second electrode attachment portion.

8. A fluid treatment assembly (10) comprising the electrical heating assembly (18) of any one of claims 1-7 and an aftertreatment component (20) contained together in a tubular housing (12).

9. The fluid treatment assembly (10) of claim 8, wherein the electrode (22) extends axially through the tubular housing (12).

10. The fluid treatment system (10) of either one of claims 8 or 9, wherein the aftertreatment component (20) comprises a catalyst-carrying substrate.

11. The fluid treatment assembly (10) of any one of claims 8-10, wherein the tubular housing (12) comprises a first portion (25) having a first diameter and a transitional portion (24) that transitions the tubular housing (12) to a second diameter that is smaller than the first diameter, and wherein the heater body (32) is housed within the first portion (25) of the tubular housing (12), and wherein the electrode (22) protrudes axially through the second portion (24).

12. The fluid treatment assembly of claim 11, wherein the electrode (22) is completely radially contained within the first diameter of the first portion (25) of the tubular housing (12).

## Patentansprüche

1. Elektrische Heizanordnung (18), die Folgendes aufweist:
einen Heizkörper (32), aufweisend:
einen Widerstandsabschnitt (34), wobei der Widerstandsabschnitt (34) ein Array von sich schneidenden Wänden, ein geschäumtes Material, verwobene Fasern oder Drähte, ein Netz oder ein Sieb aufweist, wobei der Widerstandsabschnitt (34) mehrere Kanäle, Öffnungen, Hohlräume, Poren oder Fluidströmungswege durch diesen aufweist;
mehrere Schlitze (38) in dem Widerstandsabschnitt (34), die Abschnitte des Widerstandsabschnitts (38) elektrisch voneinander trennen, um einen schlangenlinienförmigen stromführenden Pfad durch den Widerstandsabschnitt (34) zu definieren;
**dadurch gekennzeichnet, dass** die elektrische Heizanordnung (18) einen Elektrodenbefestigungsabschnitt (36) aufweist, der an einem Ende des schlangenlinienförmigen stromführenden Pfades verbunden ist, und
eine Elektrode (22), die ein erstes Ende aufweist, das an dem Elektrodenbefestigungsabschnitt (36) elektrisch mit dem Heizkörper (32) verbunden ist, wobei sich das erste Ende in einer Querrichtung von dem Heizkörper (22) und somit quer zu der Richtung des Stromflusses erstreckt,
wobei der Widerstandsabschnitt (34) einen Außenumfang aufweist, der von den mehreren Schlitzen (38) geschnitten wird, wobei der Außenumfang einer überlagerten Form (40) entspricht, die durch kontinuierliches Verfolgen sowohl über den Außenumfang als auch über Schnittpunkte der Schlitze (38) mit dem Außenumfang definiert ist, und wobei der Elektrodenbefestigungsabschnitt (36) vollständig radial innerhalb der überlagerten Form (40) enthalten ist.

2. Elektrische Heizanordnung (18) nach Anspruch 1, wobei der Widerstandsabschnitt (34) des Körpers (32) ein Array von sich schneidenden Wänden aufweist, die mehrere Kanäle bilden, die sich in einer axialen Richtung durch den Körper (32) erstrecken.

3. Elektrische Heizanordnung (18) nach Anspruch 2, wobei sich das erste Ende der Elektrode (22) in der axialen Richtung von dem Heizkörper (32) erstreckt.

4. Elektrische Heizanordnung (18) nach Anspruch 2, wobei sich das erste Ende der Elektrode (22) von dem Heizkörper (32) in einem spitzen Winkel von einer axialen Richtung erstreckt.

5. Elektrische Heizanordnung (18) nach einem der Ansprüche 1-4, wobei der Widerstandsabschnitt (34) einen Außenumfang aufweist, der von den mehreren Schlitzen (38) geschnitten wird, wobei der Außenumfang einer überlagerten Form (40) entspricht, die durch kontinuierliches Verfolgen sowohl über den Außenumfang als auch über Schnittpunkte der Schlitze (38) mit dem Außenumfang definiert ist, und wobei die Elektrode (22) vollständig radial innerhalb der überlagerten Form (40) enthalten ist.

6. Elektrische Heizanordnung (18) nach einem der Ansprüche 1-5, wobei die Elektrode einen ersten Abschnitt an dem ersten Ende, der sich quer von dem Heizkörper (22) erstreckt, einen zweiten Abschnitt an einem zweiten Ende (46), das dem ersten Ende gegenüberliegt, und einen Arm (44), der den ersten Abschnitt mit dem zweiten Abschnitt verbindet, aufweist, wobei sich der Arm (44) in einer Richtung quer zu dem ersten Abschnitt und dem zweiten Abschnitt erstreckt, so dass sich der erste Abschnitt und der zweite Abschnitt an Orten befinden, die mit unterschiedlichen Winkeln relativ zu einer Mitte (C) des Heizkörpers (32) ausgerichtet sind.

7. Elektrische Heizanordnung (18) nach einem der Ansprüche 1-6, wobei der Elektrodenbefestigungsabschnitt (36) einen ersten Elektrodenbefestigungsabschnitt und einen zweiten Elektrodenbefestigungsabschnitt aufweist, die sich an gegenüberliegenden Enden des schlangenlinienförmigen stromführenden Pfades befinden, und wobei die Elektrode (22) eine erste Elektrode und eine zweite Elektrode aufweist, die jeweils an dem ersten Elektrodenbefestigungsabschnitt und dem zweiten Elektrodenbefestigungsabschnitt mit dem Heizkörper (32) verbunden sind.

8. Fluidbehandlungsanordnung (10), die die elektrische Heizanordnung (18) nach einem der Ansprüche 1-7 und eine Nachbehandlungskomponente (20) aufweist, die zusammen in einem rohrförmigen Gehäuse (12) enthalten sind.

9. Fluidbehandlungsanordnung (10) nach Anspruch 8, wobei sich die Elektrode (22) axial durch das rohrförmige Gehäuse (12) erstreckt.

10. Fluidbehandlungssystem (10) nach einem der Ansprüche 8 oder 9, wobei die Nachbehandlungskomponente (20) ein katalysatortragendes Substrat aufweist.

11. Fluidbehandlungsanordnung (10) nach einem der Ansprüche 8-10, wobei das rohrförmige Gehäuse (12) einen ersten Abschnitt (25) mit einem ersten Durchmesser und einen Übergangsabschnitt (24), der das rohrförmige Gehäuse (12) in einen zweiten Durchmesser überführt, der kleiner als der erste Durchmesser ist, aufweist, und wobei der Heizkörper (32) innerhalb des ersten Abschnitts (25) des rohrförmigen Gehäuses (12) untergebracht ist, und wobei die Elektrode (22) axial durch den zweiten Abschnitt (24) vorsteht.

12. Fluidbehandlungsanordnung nach Anspruch 11, wobei die Elektrode (22) vollständig radial innerhalb des ersten Durchmessers des ersten Abschnitts (25) des rohrförmigen Gehäuses (12) enthalten ist.

## Revendications

1. Ensemble dispositif de chauffage électrique (18) comprenant :
un corps de dispositif de chauffage (32) comprenant :
une portion résistive (34), la portion résistive (34) comprenant un réseau de parois s'intersectant, un matériau alvéolaire, des fibres ou des fils entrelacés, une maille, ou un tamis, la portion résistive (34) comprenant une pluralité de canaux, d'ouvertures, de vides, de pores, ou de trajets d'écoulement de fluide à travers elle ;
une pluralité de fentes (38) dans la portion résistive (34) qui déconnecte électriquement des sections de la portion résistive (38) les unes des autres pour définir un trajet de transport de courant en serpentin à travers la portion résistive (34) ;
**caractérisé en ce que** l'ensemble dispositif de chauffage électrique (18) comprend une portion de fixation d'électrode (36) connectée au niveau d'une extrémité du trajet de transport de courant en serpentin, et
une électrode (22) comprenant une première extrémité qui est connectée électriquement au corps de dispositif de chauffage (32) au niveau de la portion de fixation d'électrode (36), la première extrémité s'étendant dans une direction transversale à partir du corps de dispositif de chauffage (22) et ainsi, transversale à la direction de circulation du courant,
dans lequel la portion résistive (34) comprend une périphérie externe qui est intersectée par la pluralité de fentes (38), la périphérie externe correspondant à un profil superposé (40) défini en traçant de manière continue à la fois sur la périphérie externe et sur les intersections des fentes (38) avec la périphérie externe, et dans lequel la portion de fixation d'électrode (36) est complètement contenue de manière radiale à l'intérieur du profil superposé (40).

2. Ensemble dispositif de chauffage électrique (18) selon la revendication 1, dans lequel la portion résistive (34) du corps (32) comprend un réseau de parois s'intersectant qui forment une pluralité de canaux s'étendant dans une direction axiale à travers le corps (32).

3. Ensemble dispositif de chauffage électrique (18) selon la revendication 2, dans lequel la première extrémité de l'électrode (22) s'étend dans la direction axiale à partir du corps de dispositif de chauffage (32).

4. Ensemble dispositif de chauffage électrique (18) selon la revendication 2, dans lequel la première extrémité de l'électrode (22) s'étend à partir du corps de dispositif de chauffage (32) à un angle aigu par rapport à une direction axiale.

5. Ensemble dispositif de chauffage électrique (18) selon l'une quelconque des revendications 1 à 4, dans lequel la portion résistive (34) comprend une périphérie externe qui est intersectée par la pluralité de fentes (38), la périphérie externe correspondant à un profil superposé (40) défini en traçant de manière continue à la fois sur la périphérie externe et sur les intersections des fentes (38) avec la périphérie externe, et dans lequel l'électrode (22) est complètement contenue de manière radiale à l'intérieur profil superposé (40).

6. Ensemble dispositif de chauffage électrique (18) selon l'une quelconque des revendications 1 à 5, dans lequel l'électrode comprend une première portion au niveau de la première extrémité qui s'étend transversalement à partir du corps de dispositif de chauffage (22), une seconde portion au niveau d'une seconde extrémité (46) opposée à la première extrémité, et un bras (44) connectant la première portion à la seconde portion, le bras (44) s'étendant dans une direction transversale à la première portion et à la seconde portion, de telle sorte que la première portion et la seconde portion soient à des emplacements alignés avec des angles différents relativement à un centre (C) du corps de dispositif de chauffage (32).

7. Ensemble dispositif de chauffage électrique (18) selon l'une quelconque des revendications 1 à 6, dans lequel la portion de fixation d'électrode (36) comprend une première portion de fixation d'électrode et une seconde portion de fixation d'électrode situées au niveau d'extrémités opposées du trajet de transport de courant en serpentin, et l'électrode (22) comprend une première électrode et une seconde électrode connectées au corps de dispositif de chauffage (32) respectivement au niveau de la première portion de fixation d'électrode et de la seconde portion de fixation d'électrode.

8. Ensemble de traitement de fluide (10) comprenant l'ensemble dispositif de chauffage électrique (18) selon l'une quelconque des revendications 1 à 7 et un composant de post-traitement (20) contenus ensemble dans un logement tubulaire (12).

9. Ensemble de traitement de fluide (10) selon la revendication 8, dans lequel l'électrode (22) s'étend de manière axiale à travers le logement tubulaire (12).

10. Système de traitement de fluide (10) selon l'une quelconque des revendications 8 ou 9, dans lequel le composant de post-traitement (20) comprend un substrat portant un catalyseur.

11. Ensemble de traitement de fluide (10) selon l'une quelconque des revendications 8 à 10, dans lequel le logement tubulaire (12) comprend une première portion (25) ayant un premier diamètre et une portion transitionnelle (24) qui fait transitionner le logement tubulaire (12) à un second diamètre qui est plus petit que le premier diamètre, et dans lequel le corps de dispositif de chauffage (32) est logé à l'intérieur de la première portion (25) du logement tubulaire (12), et dans lequel l'électrode (22) fait saillie de manière axiale à travers la seconde portion (24).

12. Ensemble de traitement de fluide selon la revendication 11, dans lequel l'électrode (22) est complètement contenue de manière radiale à l'intérieur du premier diamètre de la première portion (25) du logement tubulaire (12).
